# FASCICULE DE BREVET EUROPEEN

(11) **EP 2 941 793 B1**
(45) Date de publication et mention de la délivrance du brevet: **28.09.2016**
(21) Numéro de dépôt: 14700228.1
(22) Date de dépôt: 06.01.2014
(51) Int. Cl.: H01M 4/1397, H01M 4/1395, H01M 10/0585, H01M 10/04, H01M 10/0525, H01M 6/40, H01M 10/0562, H01M 4/66

(54) **PROCÉDÉ DE FABRICATION DE BATTERIES DE TYPE LITHIUM-ION**
VERFAHREN ZUR HERSTELLUNG VON LITHIUM-IONEN-BATTERIEN
METHOD FOR PRODUCING LITHIUM-ION BATTERIES

(30) Priorité: 07.01.2013 FR 1350083
(43) Date de publication de la demande: 11.11.2015
(73) Titulaire: Commissariat à l'Énergie Atomique et aux Énergies Alternatives, 75015 Paris (FR)
(72) Inventeur: NIZOU, Sylvain, 37210 Noizay (FR); AMIRAN, Johnny, 38690 Eydoche (FR); LE CRAS, Frédéric, 33140 Villenave-d'Ornon (FR); OUKASSI, Sami, 38120 Saint-Egreve (FR)
(74) Mandataire: Gevers & Orès
(86) Numéro de dépôt international: PCT/EP2014/050095
(87) Numéro de publication internationale: WO 2014/106656

(56) Documents cités:
- EP-A1- 2 270 900
- EP-A1- 2 320 502
- FR-A1- 2 873 854
- US-A- 5 171 413
- US-A1- 2003 162 094

## Description

La présente invention concerne le domaine technique des batteries de type lithium-ion en technologie de couches minces.

Ces batteries sont classiquement constituées d'une pluralité de couches comprenant une partie active, des couches de protection, des couches de collecteur de courant et des films barrière.

La partie active de la batterie comprend un empilement d'une couche de cathode, d'une couche d'électrolyte et d'une couche d'anode.

Cette partie active peut être obtenue par différents procédés dont des techniques de dépôt en phase vapeur (PVD dans la terminologie anglaise), telles que l'évaporation ou la pulvérisation cathodique.

Le fonctionnement de la batterie est le suivant : pendant sa charge, des ions lithium se déplacent de la cathode vers l'anode tandis que, lors de sa décharge, les ions lithium se déplacent de l'anode vers la cathode.

Les matériaux des couches de cathode, d'électrolyte et d'anode sont choisis en fonction de la tension que l'on souhaite obtenir aux bornes de la batterie et en fonction de l'application envisagée.

La couche de cathode est réalisée en un matériau adapté à insérer des ions lithium.

Il peut notamment s'agir d'oxyde de cobalt lithié (LiCoO₂) ou encore d'oxysulfure de titane lithié (LiTiOS).

Dans ce dernier cas, l'épaisseur de la couche est comprise entre quelques centaines de nanomètres et 10 µm.

Ainsi, à titre d'exemple, une couche de TiOS peut être formée en surface de la couche de collecteur de courant de cathode, un film mince de lithium étant ensuite déposé sur la couche de TiOS par un procédé de dépôt en phase vapeur. Le lithium diffuse ensuite naturellement dans la couche de TiOS qui est transformée en une couche de LiTiOS.

Un autre procédé est décrit dans le document EP-2 320 502, selon lequel l'insertion d'ions lithium est obtenue à partir de lithium déposé sur la couche d'anode. C'est la présence d'un court-circuit entre les couches d'anode et de cathode qui permet la migration du lithium et la pénétration des ions Li+ dans la couche de cathode. Les couches d'anode et de cathode sont séparées une fois que la migration du lithium est terminée.

Ainsi, ce procédé permet de réaliser la lithiation de la couche de cathode, une fois les couches d'électrolyte et d'anode déposées.

Ceci présente un avantage lors de la formation des interfaces entre la couche d'électrolyte et les couches de cathode et d'anode. En effet, le lithium est un métal très réactif qui est susceptible de perturber la formation des interfaces, ceci pouvant se traduire par une mauvaise adhésion entre les couches, au niveau de ces interfaces.

Le procédé décrit dans le document EP-2 320 502 présente cependant de nombreux inconvénients.

En effet, ce procédé est relativement complexe à mettre en oeuvre puisqu'il nécessite des dépôts localisés des différentes couches de l'empilement et notamment la formation, sur le substrat, d'une couche de forme complexe, comportant plusieurs portions. L'une forme une couche de collecteur de courant de cathode qui reçoit l'empilement. Les autres consistent en des plots destinés à recevoir des connexions d'anode et de cathode, reliées entre elles par une bande conductrice.

La technique de dépôt localisé par masquage limite la résolution dimensionnelle des batteries car elle nécessite d'aligner les différents niveaux de couches actives les uns par rapport aux autres à chaque étape faisant intervenir un masque.

Le procédé de fabrication présente donc une complexité qui s'accroît lorsqu'il est industrialisé et que la dimension des batteries est réduite.

Le court-circuit entre les couches d'anode et de cathode est réalisé d'une part, par la bande conductrice reliant les deux plots, réalisée au début de la fabrication des batteries et d'autre part, par la conductivité électronique de la couche d'anode, celle-ci devenant électroniquement conductrice, lors du dépôt du lithium.

Ainsi, la conductivité électronique de la couche d'anode décroit au fur et à mesure de la diffusion du lithium vers la couche de TiOS. De ce fait, l'effet du court-circuit diminue progressivement et ne peut donc pas assurer la décharge complète de la batterie.

EP 2 270 900 envisage une mise en court-circuit des couches d'anode et de cathode pour assurer la diffusion des ions lithium entre l'anode et la cathode pendant la fabrication de la batterie. Néanmoins, le procédé utilisé à cet effet n'est pas précisé.

Enfin, ce procédé de fabrication nécessite d'ouvrir le court-circuit au niveau de chaque batterie avant de les séparer les unes des autres, ce qui constitue une étape supplémentaire du procédé de fabrication.

L'invention a pour objet de pallier ces inconvénients en proposant un procédé de fabrication de batteries de type lithium-ion dont la mise en oeuvre est simplifiée et qui permet d'assurer une décharge complète de la batterie.

Ainsi, ce procédé comprend les étapes suivantes :
(a) formation sur un substrat d'une couche de collecteur de courant de cathode et d'un empilement d'une couche de cathode en un matériau susceptible d'insérer des ions lithium, d'une couche d'électrolyte et d'une couche d'anode,
(b) dépôt d'une couche de lithium sur la couche d'anode pour former un alliage à base de lithium,
(c) mise en court-circuit des couches d'anode et de cathode par le dépôt, sur la couche d'anode, d'une couche de collecteur de courant d'anode, cette mise en court-circuit assurant la diffusion des ions lithium depuis la couche d'anode vers la couche de cathode et
(d) séparation des batteries entraînant l'ouverture du court-circuit entre les couches d'anode et de cathode pour toutes les batteries.

Dans un mode préféré de mise en oeuvre du procédé, au cours de l'étape (a), l'empilement des couches de cathode, d'électrolyte et d'anode occupe une partie du substrat, une zone d'exclusion étant ménagée en périphérie de la couche de collecteur de courant de cathode.

Dans ce cas, au cours de l'étape (c), la couche de collecteur de courant d'anode enrobe l'empilement et est en contact avec ladite zone d'exclusion.

De préférence, au cours de l'étape (a), les couches de cathode et d'électrolyte sont réalisées de telle sorte que la couche d'électrolyte enrobe la couche de cathode.

De préférence, l'étape (d) est réalisée par des étapes de gravure.

De façon avantageuse, la couche de cathode est en oxysulfure de titane (TiOS), la couche d'anode en silicium et la couche d'électrolyte en oxynitrure phosphoré de lithium (LiPON).

De façon préférée, la couche de collecteur de courant de cathode comprend une couche métallique déposée sur le substrat et une couche barrière, entre la couche métallique et la couche de cathode.

De façon avantageuse, la couche barrière de la couche de collecteur de courant de cathode et la couche de collecteur de courant d'anode sont réalisées en un même matériau, par exemple en titane.

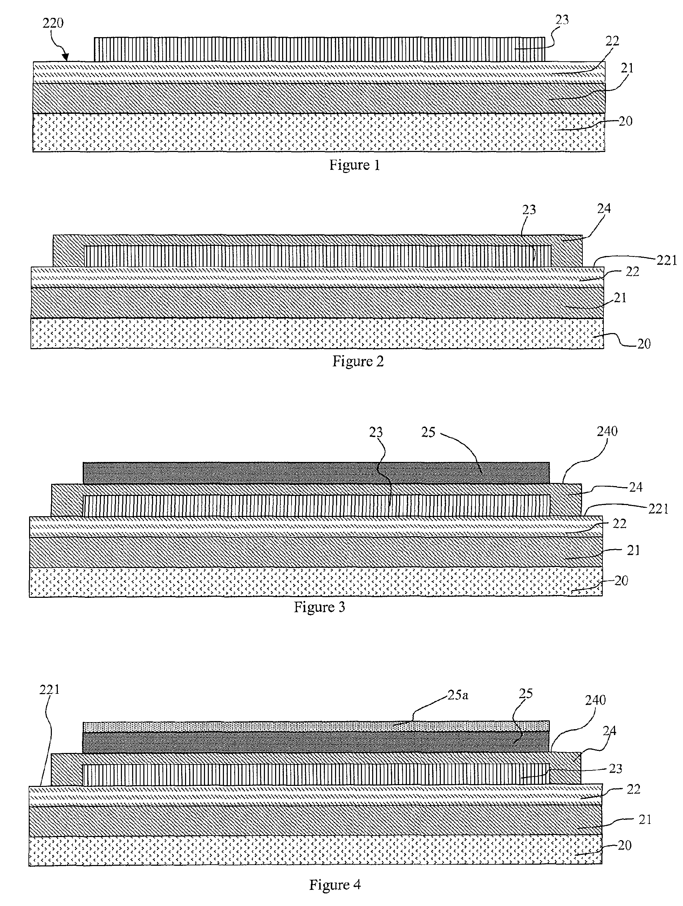

L'invention sera mieux comprise et d'autres buts, avantages et caractéristiques de celle-ci apparaîtront plus clairement au regard des figures 1 à 8 suivantes. Ces figures sont des vues en coupe montrant différentes étapes de mise en oeuvre du procédé selon l'invention.

La figure 1 montre que sur le substrat 20, est formée une couche de métal 21 qui est une couche de collecteur de courant inférieur ou une couche de collecteur de courant de cathode.

Le substrat 20 peut être réalisé en silicium ou en verre. Il s'agit d'un support de fabrication dont la fonction est purement mécanique.

Ce substrat peut par exemple présenter une forme de disque avec un diamètre de 200 mm et une épaisseur de 700 µm.

Lorsqu'il est réalisé en silicium, une couche isolante peut être prévue, entre le substrat 20 et la couche 21, pour faire barrière à une éventuelle diffusion de lithium dans le substrat.

De façon classique, cette couche isolante comprend une couche de nitrure de silicium, une couche en oxyde de silicium permettant de faciliter l'accroche du nitrure de silicium sur le substrat en silicium.

Sur la couche 21 est réalisée une autre couche métallique 22 qui fait également partie de la couche de collecteur de courant de cathode.

En d'autres termes, cette couche de collecteur de courant de cathode est du type bi-couche.

Ces deux couches 21 et 22 sont réalisées sur l'ensemble du substrat 20 par une technique de dépôt par évaporation ou par pulvérisation cathodique.

La couche 21 peut notamment consister en une couche d'aluminium d'une épaisseur de 1,5 µm.

La couche 22 est, quant à elle, réalisée en un métal ayant une fonction de barrière contre la diffusion du lithium. Il peut notamment s'agir d'une couche de titane présentant une épaisseur comprise entre 0,5 et 1 µm.

Sur la couche métallique 22 est déposée une couche 23 correspondant à une couche de cathode.

Comme l'illustre la figure 1, cette couche 23 n'est pas déposée sur l'ensemble de la couche 22. Au contraire, une zone périphérique 220 de la couche 22 ne reçoit pas la couche 23. Cette zone forme un anneau dans le cas d'un substrat présentant la forme d'un disque. Elle sera par la suite dénommée une zone d'exclusion.

Cette zone d'exclusion est obtenue grâce à une couronne de maintien du substrat pendant le dépôt qui présente un diamètre approprié. Du fait de la présence de cette couronne, une partie de la couche 22 ne reçoit pas le matériau constitutif de la couche 23.

La couche 23 peut notamment être réalisée en TiOS.

Elle peut être obtenue par différentes techniques, notamment une technique de dépôt en phase vapeur (Physical Vapor Deposition ou PVD dans la terminologie anglaise). Cette couche 23 peut notamment être déposée par pulvérisation cathodique.

L'épaisseur de la couche de TiOS peut être par exemple comprise entre 0,5 et 10 µm.

La figure 2 illustre une autre étape du procédé, dans laquelle une couche d'électrolyte 24 est déposée sur la couche 23.

Cette couche 24 enrobe la couche 23 mais ne recouvre pas totalement la première zone d'exclusion 220 de la couche 22. Ainsi, est définie en périphérie de la couche 22, une deuxième zone d'exclusion 221 qui est une partie de la zone 220 et dont la surface est inférieure à celle de la zone 220.

Le diamètre de la couronne de maintien dans la chambre de dépôt correspondante est choisi de façon appropriée.

Dans le cas d'un substrat présentant la forme d'un disque, cette zone d'exclusion 221 forme un anneau dont le diamètre intérieur est supérieur à celui du diamètre intérieur de la première zone d'exclusion 220.

Cette couche 24 est notamment réalisée en un électrolyte solide, par exemple l'oxynitrure phosphoré de lithium (LiPON). Cette couche en LiPON peut notamment être déposée par pulvérisation cathodique.

Son épaisseur peut être comprise entre 0,5 et 4 µm.

La figure 3 illustre une autre étape du procédé, dans laquelle une couche d'anode 25 est déposée sur la couche d'électrolyte 24.

De préférence, cette couche 25 n'est pas déposée sur toute la surface de la couche 24. Au contraire, une zone périphérique 240 de la couche 24 est dépourvue du matériau constitutif de la couche 25.

Là encore, dans le cas d'un substrat en forme de disque, la zone 240 présente une forme annulaire. Elle sera dénommée par la suite troisième zone d'exclusion.

De préférence, les dimensions de cette troisième zone d'exclusion sont telles que les couches 23 et 25 sont sensiblement vis-à-vis. En d'autres termes, pour un substrat en forme de disque, le diamètre interne de la troisième zone d'exclusion 240 est identique au diamètre interne de la première zone d'exclusion 220, ces deux zones étant centrées sur le même axe.

Cette couche d'anode 25 peut notamment être réalisée en silicium par une technique de dépôt physique en phase vapeur (Physical Vapor Deposition ou PVD dans la terminologie anglaise), telle que la pulvérisation cathodique. Cette couche peut présenter une épaisseur comprise entre 0,01 et 0,5 µm.

La couche 25 pourrait être déposée sur l'ensemble de la couche 24, dans la mesure où la couche 24 enrobe la couche 23. En effet, ceci évite que le silicium formant la couche 25 entre en contact avec le TiOS de la couche 23, ce qui pourrait notamment créer un court-circuit lors du dépôt de la couche 25.

La figure 4 illustre l'étape suivante du procédé, dans laquelle une couche 25a de lithium est déposée sur la couche d'anode 25, notamment par évaporation.

La couche 25a en lithium recouvre la couche 25. Cependant, elle ne s'étend pas au-delà de cette couche 25 et, en particulier, elle n'est pas en contact avec la zone d'exclusion 240.

Cette couche 25a est déposée de façon localisée, par exemple en jouant sur le diamètre de l'anneau de maintien mécanique du substrat dans la chambre de dépôt.

Le lithium diffuse dans la couche 25, de façon à former un alliage à base de lithium, par exemple LiSi.

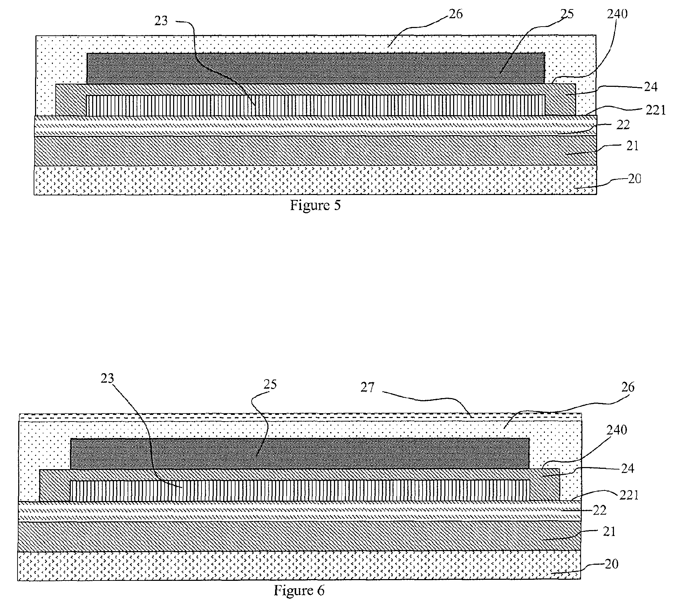

Ainsi, sur la figure 5, la couche d'anode 25 est formée de cet alliage à base de lithium.

La figure 5 illustre une autre étape du procédé dans laquelle est formée la couche 26 de collecteur de courant d'anode.

Cette couche 26 enrobe les couches 24 et 25 et elle recouvre donc les zones d'exclusion 221 et 240.

Cette couche 26 peut notamment être réalisée en titane, comme la couche 22 de la couche de collecteur de courant inférieur en mettant en oeuvre une technique de pulvérisation cathodique ou d'évaporation. Les couches 22 et 26 étant en contact avec les électrodes (la couche de cathode 23 et la couche d'anode 25), elles génèrent un court-circuit entre la couche de cathode 23 et la couche d'anode 25. Ceci ferme le circuit électrique que constitue l'empilement.

Il convient de noter que le court-circuit est assuré, quelle que soit la conductivité électronique de la couche d'anode 25.

Ce court-circuit déclenche la décharge de la batterie formée par l'empilement, laquelle se traduit par la diffusion des ions lithium depuis la couche d'anode 25 vers la couche de cathode 23, en passant par la couche d'électrolyte 24.

Du fait de la diffusion des ions lithium, la couche d'anode 23 se transforme en LiTiOS et la batterie se trouve à l'état déchargé. Dans la mesure où le court-circuit est indépendant de la conductivité électronique de la couche d'anode 25, une décharge complète de la batterie est assurée.

En pratique, l'empilement est ensuite gravé pour obtenir une pluralité de batteries. Cependant, le court-circuit est réalisé au niveau de l'empilement et non batterie par batterie.

De plus, l'effet du court-circuit ne diminue pas au fur et à mesure de la diffusion du lithium dans la couche de TiOS car ce n'est pas la conductivité électronique du silicium de la couche d'anode qui est mise à contribution mais la couche 22 métallique qui s'étend sur toute la surface du substrat.

Ceci permet de garantir une décharge complète et homogène dans tout l'empilement.

La figure 6 illustre l'étape suivante du procédé dans laquelle une couche métallique 27 de reprise de contact est déposée sur l'ensemble de la couche 26 de collecteur de courant d'anode.

On peut considérer que cette couche 27 fait également partie de la couche de collecteur de courant d'anode qui est ainsi du type bi-couche.

La figure 6 montre que ce dépôt ne comporte aucune zone d'exclusion.

Cette couche métallique 27 peut être réalisée en aluminium. Elle peut présenter une épaisseur comprise entre 1 et 3 µm.

Il convient de noter que, dans l'empilement illustré à la figure 6, il existe toujours un court-circuit entre les couches d'anode et de cathode 25 et 23.

Il convient également de noter que l'empilement illustré à la figure 6 ne pourrait pas être utilisé comme batterie en tant que tel. En effet, après la décharge complète, il est nécessaire de couper le contact entre les couches 22 et 26.

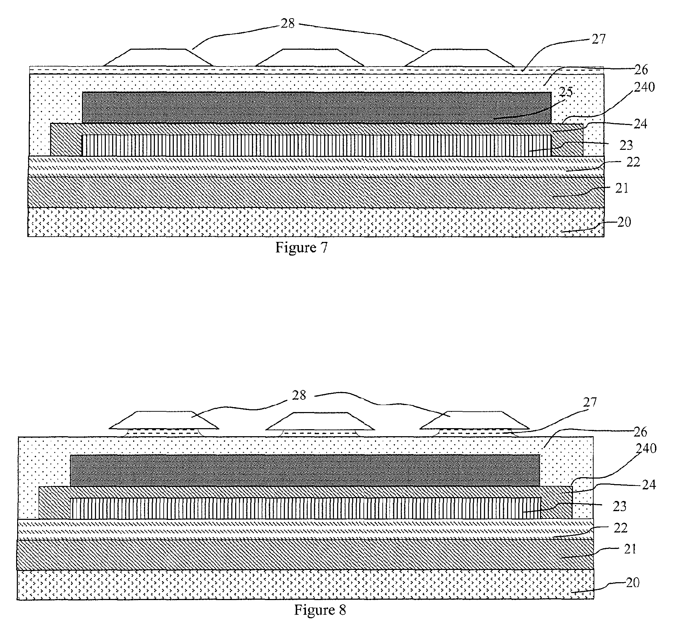

Les figures 7 à 10 illustrent des étapes du procédé permettant de distinguer des batteries individuelles sur le substrat 20.

Ces figures illustrent la réalisation de trois batteries sur le substrat. Bien entendu, cette représentation est donnée à titre purement illustratif. En pratique, le nombre de batteries réalisées simultanément sur le substrat est très important. Il est bien sûr proportionnel à leur surface respective. A titre d'exemple, plus de 3 000 batteries peuvent être réalisées sur un substrat présentant un diamètre de 200 mm.

La figure 7 illustre une étape dans laquelle une couche de résine est déposée sur la couche 27 de reprise de contact d'anode.

Cette couche de résine subit des étapes classiques d'insolation et de développement, de façon à obtenir une présence localisée de résine sur la couche 27. Sur l'exemple illustré à la figure 7, sont illustrés trois plots 28 de résine. La résine, ainsi localisée, servira de masque de gravure.

La figure 8 illustre l'étape de gravure de la couche 27 de reprise de contact d'anode.

Lorsque cette couche 27 est réalisée en aluminium, la gravure peut être réalisée par une technique de gravure humide mettant en oeuvre une solution acide du type Alu-etch® ou par une technique de gravure sèche, par exemple une gravure par plasma couplé par induction (Inductively Coupled Plasma ou ICP dans la terminologie anglaise) ou une gravure ionique réactive (Reactive-Ion Etching ou RIE dans la terminologie anglaise).

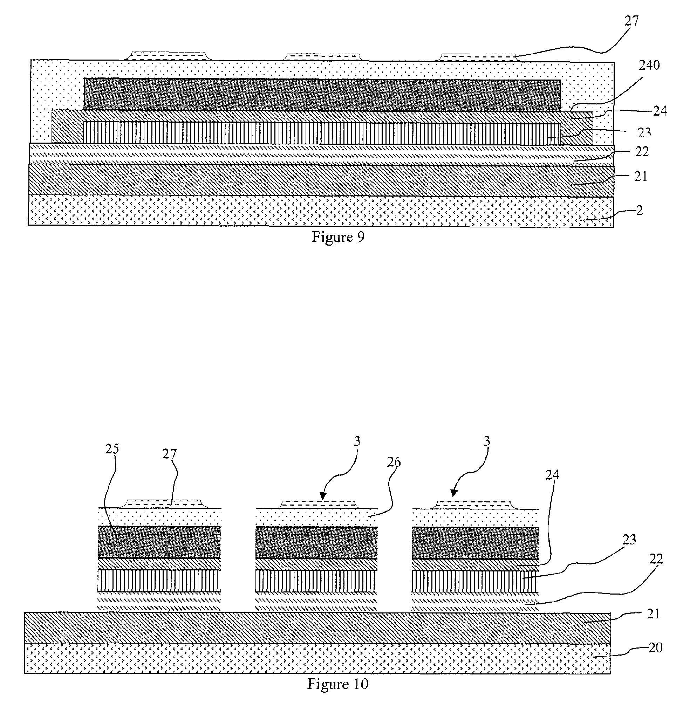

La figure 9 illustre une autre étape du procédé dans laquelle les plots de résine sont retirés, en utilisant des solutions de solvants qui dissolvent la résine.

Par ailleurs, des techniques de gravure sèche par plasma utilisant de l'oxygène permettent de compléter les techniques humides pour retirer la résine.

Enfin, la figure 10 illustre une dernière étape du procédé dans laquelle l'empilement constitué des couches 22 à 27 est gravé. Grâce à cette étape de gravure, les batteries sont séparées les unes des autres. Elles se trouvent à l'état déchargé, les ions lithium présents dans la couche 25 ayant diffusé dans la couche de cathode 23.

La gravure peut être réalisée de façon localisée en utilisant un masque défini par photolithographie ou, sans masque, en gravant directement les motifs un par un. Dans ce cas, on peut mettre en oeuvre une gravure par faisceau d'ions (Ion Beam Etching ou IBE dans la terminologie anglaise) qui reproduit l'effet d'un masquage.

De plus, cette étape de séparation ouvre le court-circuit entre les couches d'anode et de cathode.

Par contre, la couche 21 n'est pas gravée et elle est donc commune à toutes les batteries. Elle sert toujours de collecteur de courant de cathode, comme la couche 22.

La couche 21 permet ainsi de créer facilement des reprises de contact de part et d'autre des batteries.

On peut noter que, lorsque le substrat 20 est réalisé en un matériau conducteur, la couche 21 n'est pas utile.

Par ailleurs, la couche 22 pourrait être omise si la couche 21 était réalisée en un matériau remplissant à la fois la fonction de collecteur et de barrière à la diffusion du lithium.

Ainsi, grâce au procédé selon l'invention, l'ouverture du court-circuit entre les couches d'anode et de cathode ne nécessite aucune étape particulière. Cette ouverture se produit automatiquement lors de l'étape de séparation des batteries sur le substrat.

Par ailleurs, le procédé selon l'invention permet de réaliser une pluralité de batteries à partir de la formation d'un seul empilement sur le substrat.

Ceci simplifie la mise en oeuvre du procédé, par rapport à des procédés demandant des dépôts localisés, comme celui décrit dans le document EP-2 320 502.

En effet, toutes les couches actives sont déposées les unes sur les autres sans utiliser de masque. Il n'est donc plus nécessaire d'aligner les différents niveaux de couches actives les uns avec les autres, avec un masque à chaque étape. Les batteries sont délimitées par la dernière étape de photogravure. Ceci permet de réduire la taille des batteries et d'améliorer la résolution.

Les seules contraintes pour le dépôt des couches existent en périphérie du substrat, sur laquelle il convient de prévoir des zones d'exclusion.

Cependant, ces zones d'exclusion sont facilement obtenues en adaptant le diamètre de la couronne de maintien du substrat dans chaque chambre de dépôt dédiée à un matériau donné.

Enfin, comme souligné plus haut, le procédé selon l'invention permet une décharge complète des batteries.

On peut encore noter que les étapes ultérieures permettant la réalisation de reprises de contact par dépôt métallique et couches interdiélectriques, peuvent être réalisées ensuite. Une dernière étape consiste en l'encapsulation des batteries.

A titre d'exemple, la reprise de contact pour redescendre le contact d'anode au niveau du substrat peut être réalisée de la manière suivante.

Une couche de diélectrique du type nitrure de silicium est déposée sur toutes les batteries ainsi que sur la couche 21 entre deux batteries. Cette couche est photogravée pour accéder, en surface des batteries, à la couche 27 et, entre les batteries, à la couche 21. Une couche en un matériau organique du type résine époxy, puis une couche de diélectrique du type nitrure de silicium, peuvent également être déposées. Ces deux couches sont également photogravées à la surface de la batterie pour permettre les reprises de contact avec la couche 27.

Une couche de reprise de ligne, dite RDL, par exemple en aluminium, est déposée sur les trois couches SiN/epoxy/SiN et vient en contact avec la couche 27 dans l'ouverture faite en surface de la batterie. Cette couche RDL est ensuite photogravée de telle sorte qu'une piste métallique en contact avec la couche 27 redescende entre chaque batterie. Ainsi, le contact avec les couches 21 et 27 peut être repris sur des plots situés au même niveau et localisés entre chaque batterie.

Les signes de référence insérés après les caractéristiques techniques figurant dans les revendications ont pour seul but de faciliter la compréhension de ces dernières et ne sauraient en limiter la portée.

## Revendications

1. Procédé de fabrication de batteries de type lithium-ion comprenant les étapes suivantes :
(a) formation sur un substrat d'une couche de collecteur de courant de cathode (21, 22) et d'un empilement d'une couche de cathode (23) en un matériau susceptible d'insérer des ions lithium, d'une couche d'électrolyte (24) et d'une couche d'anode (25),
(b) dépôt d'une couche de lithium (25a) sur la couche d'anode (25) pour former un alliage à base de lithium,
(c) mise en court-circuit des couches d'anode et de cathode par le dépôt, sur la couche d'anode, d'une couche de collecteur de courant d'anode (26), cette mise en court-circuit assurant la diffusion des ions lithium depuis la couche d'anode (25) vers la couche de cathode (23) et
(d) séparation des batteries, entraînant l'ouverture du court-circuit entre les couches d'anode et de cathode pour toutes les batteries.

2. Procédé selon la revendication 1 dans lequel, au cours de l'étape (a), l'empilement des couches de cathode (23), d'électrolyte (24) et d'anode (25) occupe une partie du substrat, une zone d'exclusion (221) étant ménagée en périphérie de la couche de collecteur de courant de cathode (21, 22).

3. Procédé selon la revendication 2 dans lequel, au cours de l'étape (c), la couche de collecteur de courant d'anode (26) enrobe l'empilement et est en contact avec ladite zone d'exclusion (221).

4. Procédé selon les revendications 2 ou 3, dans lequel, au cours de l'étape (a), les couches de cathode (23) et d'électrolyte (24) sont réalisées de telle sorte que la couche d'électrolyte enrobe la couche de cathode.

5. Procédé selon l'une des revendications 1 à 4, dans lequel l'étape (d) est réalisée par des étapes de gravure.

6. Procédé selon les revendications 1 à 5 dans lequel, la couche de cathode (23) est en oxysulfure de titane (TiOS) et la couche d'anode (25) est en silicium.

7. Procédé selon les revendications 1 à 6 dans lequel, la couche d'électrolyte (24) est en oxynitrure phosphoré de lithium (LiPON).

8. Procédé selon l'une des revendications 1 à 7, dans lequel la couche de collecteur de courant de cathode comprend une couche métallique (21) déposée sur le substrat et une couche barrière (22), entre la couche métallique (21) et la couche de cathode (23).

9. Procédé selon les revendications 1 à 8 dans lequel, la couche barrière (22) de la couche de collecteur de courant de cathode et la couche de collecteur de courant d'anode (26) sont réalisées en un même matériau, par exemple en titane.

## Patentansprüche

1. Verfahren für die Herstellung von Batterien vom Typ Lithium-Ionen, umfassend die folgenden Schritte:
(a) Bilden, auf einem Substrat, einer Kathodenstromkollektorschicht (21, 22) und einer gestapelten Kathodenschicht (23) aus einem Material, das imstande ist, Litiumionen zu integrieren, einer Elektrolytschicht (24) und einer Anodenschicht(25),
(b) Aufbringen einer Lithiumschicht (25a) auf der Anodenschicht (25), um eine Legierung auf Lithiumbasis zu bilden,
(c) Masseschließen der Anoden- und Kathodenschicht durch Aufbringen, auf der Anodenschicht, einer Anodenstromkollektorschicht (26), wobei dieses Masseschließen die Diffusion der Lithiumionen aus der Anodenschicht (25) in die Kathodenschicht (23) sichert, und
(d) Trennen der Batterien, was das Öffnen des Masseschlusses zwischen der Anoden- und Kathodenschicht für alle Batterien bewirkt.

2. Verfahren nach Anspruch 1, wobei während des Schritts (a) der Stapel der Kathoden- (23), Elektrolyt- (24) und Anodenschicht (25) einen Teil des Substrats belegt, wobei an der Periphere der Kathodenstromkollektorschicht (21, 22) eine Exklusionszone (221) gebildet ist.

3. Verfahren nach Anspruch 2, wobei während des Schritts (c) die Anodenstromkollektorschicht (26) den Stapel umschließt und mit der Exklusionszone (221) im Kontakt ist.

4. Verfahren nach den Ansprüchen 2 oder 3, wobei während des Schritts (a) die Kathoden- (23) und Elektrolytschicht (24) derart realisiert sind, dass die Elektrolytschicht die Kathodenschicht umschließt.

5. Verfahren nach einem der Ansprüche 1 bis 4, wobei der Schritt (d) anhand von Gravurschritten durchgeführt wird.

6. Verfahren nach den Ansprüchen 1 bis 5, wobei die Kathodenschicht (23) aus Titanoxisulfid (TiOS) und die Anodenschicht (25) aus Silizium ist.

7. Verfahren nach den Ansprüchen 1 bis 6, wobei die Elektrolytschicht (24) aus Lithium-Phosphor-Oxinitrid (LiPON) ist.

8. Verfahren nach einem der Ansprüche 1 bis 7, wobei die Kathodenstromkollektorschicht eine Metallschicht (21), die auf dem Substrat aufgebracht ist, und eine Barriereschicht (22) zwischen der Metallschicht (21) und der Kathodenschicht (23) umfasst.

9. Verfahren nach den Ansprüchen 1 bis 8, wobei die Barriereschicht (22) der Kathodenstromkollektorschicht und die Anodenstromkollektorschicht (26) aus einem gleichen Material hergestellt sind, beispielsweise aus Titan.

## Claims

1. A process for manufacturing lithium-ion batteries comprising the following steps:
(a) forming, on a substrate, a cathode current collector layer (21, 22) and a stack made up of a cathode layer (23) made of a material into which it is possible to insert lithium ions, an electrolyte layer (24) and an anode layer (25);
(b) depositing a lithium layer (25a) on the anode layer (25) in order to form a lithium-based alloy;
(c) short-circuiting the anode and cathode layers by depositing, on the anode layer, an anode current collector layer (26), this short-circuiting ensuring lithium ions diffuse from the anode layer (25) into the cathode layer (23); and
(d) separating the batteries, thereby opening the short-circuit between the anode and cathode layers for all the batteries.

2. The process as claimed in claim 1, in which, in step (a), the stack of cathode (23), electrolyte (24) and anode (25) layers occupies a portion of the substrate, an exclusion zone (221) being provided on the periphery of the cathode current collector layer (21, 22).

3. The process as claimed in claim 2, in which, in step (c), the anode current collector layer (26) encapsulates the stack and makes contact with said exclusion zone (221).

4. The process as claimed in either one of claims 2 and 3, in which, in step (a), the cathode (23) and electrolyte (24) layers are produced so that the electrolyte layer encapsulates the cathode layer.

5. The process as claimed in one of claims 1 to 4, in which step (d) consists of steps of etching.

6. The process as claimed in claims 1 to 5, in which the cathode layer (23) is made of titanium oxysulfide (TiOS) and the anode layer (25) is made of silicon.

7. The process as claimed in claims 1 to 6, in which the electrolyte layer (24) is made of lithium phosphorus oxynitride (UPON).

8. The process as claimed in one of claims 1 to 7, in which the cathode current collector layer comprises a metal layer (21) deposited on the substrate and a barrier layer (22) between the metal layer (21) and the cathode layer (23).

9. The process as claimed in claims 1 to 8, in which the barrier layer (22) of the cathode current collector layer and the anode current collector layer (26) are both made of the same material, titanium for example.
